# EUROPEAN PATENT APPLICATION

(11) **EP 1 238 608 A1**
(43) Date of publication of application: **11.09.2002**
(21) Application number: 02251071.3
(22) Date of filing: 16.02.2002
(51) Int. Cl.: A47G 19/16, A47J 31/18, A47J 31/00, A47G 21/04

(54) **Beverage maker and method of making beverages**

(30) Priority: 27.02.2001 GB 0104791
(71) Applicant: Burton-Chambers, Roderick Lloyd, Halifax HX1 0JL (GB)
(72) Inventor: Burton-Chambers, Roderick Lloyd, Halifax HX1 0JL (GB)
(74) Representative: Sherrard-Smith, Hugh

(57) **Abstract**

A beverage applicator (1) has a mixture of coffee, milk and sugar (5) applied onto a support member (3). The handle region (3a) is held and the beverage material is located into hot water. The beverage applicator (1) is then stirred by using the handle to cause the beverage to dissolve and form the drink.

## Description

The invention relates to a beverage maker and a method of making a beverage and a kit of parts for making a beverage.

Means for producing beverages such as coffee and hot chocolate which utilise disposable containers of the various beverage components employed to produce a beverage are well known.

For example instant coffee is often provided in a dry granular or powder from within a disposable cup. The consumer then adds hot water to the cup to produce unsweetened black coffee. If the consumers preference is for sweetened coffee they then have to add sugar or a sugar substitute which is generally provided in a single serving sachet. If the consumer wishes to add milk to their coffee it is then necessary for them to utilise a separate, single serving container of milk. It is also common for a disposable spoon or stirrer to be provided so that the coffee solution may be properly mixed prior to consumption of the beverage.

It is also known for a consumer to be provided with ready made black coffee in either a disposable or non-disposable cup and then to be provided with disposable sachets of sugar and containers of milk to add to the black coffee and mix with a disposable spoon or stirrer.

These prior art methods of producing beverages are common in many situations, particularly those where rapid and convenient service is a priority. For example these methods are common on airlines and in fast food restaurants and motorway service stations. However these prior art methods for producing beverages have several disadvantages.

For example the addition of milk and sugar or sweetener to the beverage solution may be a messy affair. It is common for the disposable milk container to split or spill milk on opening and for the sugar or sweetener to spill as the sachet is torn open. This results in unnecessary time being spent cleaning restaurants etc and can often cause marking of consumers clothes.

The use of separate milk containers, sugar/sweetener sachets and spoons/stirrers also results in time consuming ordering and stocking processes for retailers and creates a need for a considerable amount of storage space.

Perhaps most importantly the use of separate milk containers, sugar/sweetener sachets and spoons/stirrers creates a considerable volume of waste. This is inconvenient for both the consumer and retailer alike who must deal with the waste. This is particularly so on aeroplanes where the waste must be stored onboard prior to landing. The excessive amounts of waste generated are also harmful to the environment.

It is an object of the present invention to attempt to overcome at least one of the above or other disadvantages.

According to the present invention a beverage maker comprises:
a support having a handle at one region and at least one beverage component at a different region.

Throughout this specification the term "beverage component" includes any beverage component which forms a beverage by being dispersed through water, especially warm water, either by being dissolved in it, in the form of a solution or by being in suspension.

The beverage component may comprise a single component of a drink or more than one component such as coffee, cocoa, milk, sugar and sweeteners or any combination thereof.

If a combination of two or more beverage components is employed the separate components may comprise a mixture or they may be separate from each other such as in consecutive layers which may overlap each other or which may be located at different sections of the support or any combination of the above manners.

The beverage component may comprise dry material, a paste, a viscous liquid or, if two or more components are employed, it may comprise any combination thereof.

The support may comprise any suitable, substantially rigid, material. For example the support may comprise wood, metal or a plastics material. Preferably the support comprises a plastics material, more preferably the support comprises a thermally stable plastics material.

The support may be of any suitable form such that it may be held by the handle region while the beverage component is immersed in water. For example the support may comprise a sheet, a rod, a stick or a tube.

The support may include one or more apertures passing therethrough in the region where the beverage component is located which aperture or apertures may be in the lateral direction. The beverage component may be applied to the support on either side of and/or within the or each aperture thus improving the bond between the support member and the body of the beverage component.

Alternatively or additionally the support may comprise cavities extending partially therethrough in the region where the beverage component is located. The beverage component may at least partially fill these cavities in order to improve the bond between the body of the beverage component and the support. Additionally or alternatively the support may comprise projections, preferably laterally extending projections. The projections may extend into the body of the beverage component in order to improve the securement of the body of beverage component to the support member.

The support may comprise a longitudinally extending member. The support may include a longitudinally extending opening or cavity which may contain some or all of the beverage material.

The longitudinally extending opening may have an opening at at least one end. Preferably the longitudinally extending cavity has an opening in one or more sides of the support. Preferably the cavity has a longitudinally extending opening in one side of the support.

The support may include at least one opening extending from one side to the other of the support.

The beverage component may be applied to one or more sides of the support and/or to the end thereof.

Preferably the body of beverage component surrounds the periphery of the support over at least part of its extent.

Alternatively at least some of the body of beverage component may be contained within a hollow support member or within an external cavity of the support member.

Additional components may be used to assist in securing the beverage to the support. For example the additional components may comprise one or more binding agents, suitable for human consumption, which are known within the food industry.

In addition or alternatively a layer such as a protective layer which may be a glaze may be applied to at least part of the outer exposed surface of the beverage. The layer may serve to hold the beverage component together and to help secure it to the support prior to insertion into water. The protective layer may be soluble in water. The layer may comprise rice paper. The rice paper may serve to hold the beverage component together and to secure it to the support prior to insertion into water. Upon insertion into water the rice paper may dissolve freeing the beverage component or allowing the beverage component to be dissolved.

The layer may comprise an insoluble layer which may be perforated or porous. The perforations may be of a suitable size such that only dissolved beverage component or small particles of the beverage component may pass through and be released into the water upon the insertion into water. This may advantageously prevent the production of a beverage containing lumps of undissolved beverage. The layer may comprise a perforated plastics material especially a thermally stable plastics material.

In a further embodiment the beverage component may be contained within a hollow support member having perforations of a suitable size to allow dissolved beverage component or small particles of the beverage component to be released through them upon insertion into water.

The beverage maker may be provided with a wrapper. The wrapper may comprise any material well known in the food industry for wrapping food products. For example the wrapper may comprise a waxed paper material or a plastics material.

The invention further provides a method of making a beverage comprising:
locating a beverage component on a support into a container,
locating a liquid component of a drink into the container and stirring the support by holding a handle on the support to at least partially mix the beverage.

The method may comprise stirring the support to dissolve the beverage component and may comprise stirring the support to dissolve the beverage component from the support.

The method may comprise adding the liquid component before or after locating the support into the container.

The method may comprise selecting a beverage component on a support from one of a plurality of different beverage components on different supports prior to making the beverage.

Preferably the beverage applicator is removed from the beverage after the beverage is produced.

The present invention includes a beverage made by a method as herein referred to or having used a beverage maker as herein referred to.

According to a further aspect of the present invention, a kit of parts for making a beverage comprises a beverage container and a plurality of supports each having a handle at one region and at least one beverage component at a different region, each beverage component on each support having a different taste.

By way of example a specific embodiment will now be described with reference to the accompanying drawings, in which:
Figure 1 shows a sectional view of a beverage applicator beverage maker) having a support member and a beverage coating;
Figure 2 shows a perspective view of the beverage applicator of Figure 1;
Figure 3 shows another embodiment of the beverage coating of the beverage applicator of Figure 1;
Figure 4 shows another embodiment of the beverage coating of the beverage applicator of Figure 1;
Figure 5 shows an alternative embodiment of the support member of the beverage applicator of Figure 1;
Figure 6 shows an alternative embodiment of a beverage applicator;
Figure 7 shows another embodiment of a beverage applicator;
Figure 8 shows another embodiment of a beverage applicator, and
Figure 9 shows another embodiment of a beverage applicator.

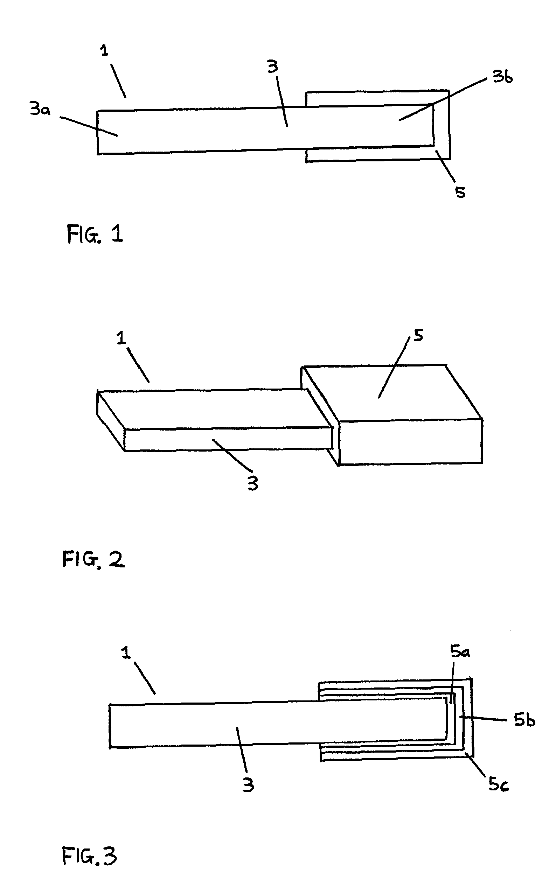

Figures 1 and 2 show details of one embodiment of the beverage applicator (beverage maker) of the invention. The beverage applicator 1 comprises a support member 3 having a beverage material 5 applied to its outer surface.

The support member comprises a handle region 3a and a beverage support region 3b.

The beverage material 5 comprises a mixture of coffee, milk and sugar applied to the support member as one layer.

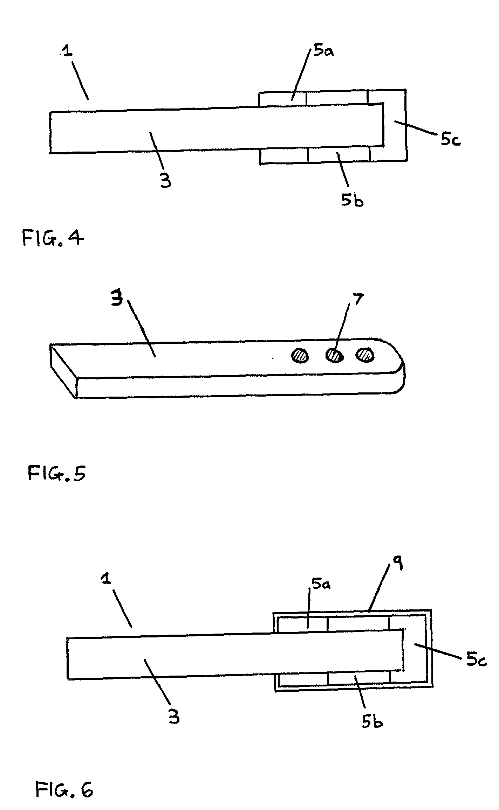

In alternative embodiments of the invention the separate components of the beverage material may be applied as consecutive layers as shown in Figure 3 or to separate regions of the support member as shown in Figure 4, where 5a is a coffee component, 5b is a milk component and 5c is a sugar component.

Figure 5 shows an alternative embodiment of the support member 3 in which the support member is provided with three apertures 7 passing through the support member in the lateral direction. These apertures improve the bond between the support member and the body of the beverage material prior to the beverage applicators insertion into water. The apertures are also believed to assist the mixing of the beverage when the beverage applicator is used to stir the beverage solution.

Figure 6 shows an alternative embodiment of the beverage applicator 1 of the invention. The beverage components 5a, 5b, 5c are applied to the surface of the support member 3 and encased by a layer of rice paper 9. The rice paper serves to secure or assist in securing or retaining the beverage material to the support member 3 prior to the beverage applicator being utilised to produce a beverage. Upon insertion of the beverage applicator into water the rice paper dissolves exposing the beverage material which dissolves from the applicator or which falls from the applicator for subsequent dissolving into the water to produce the beverage.

In a further embodiment (not shown) a glaze is employed in place of the rice paper.

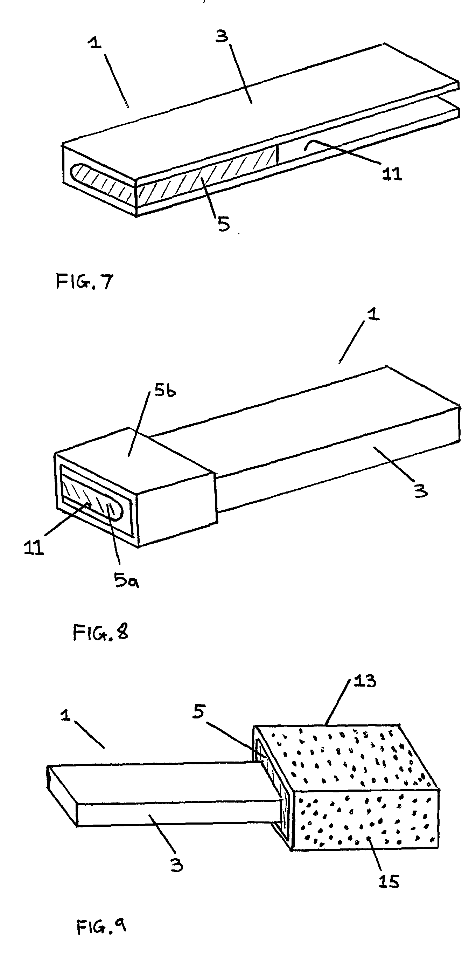

Figure 7 shows an alternative embodiment of the beverage applicator 1 in which the support member 3 is a substantially U-shaped member such that it comprises a longitudinal cavity 11 open on one side which contains the beverage material 5.

In a further preferred embodiment (not shown) the support member further comprises a series of apertures passing through one side of the support member into the cavity 11. This allows the beverage components and water to flow through the cavity and aids mixing of the beverage.

Figure 8 shows a further embodiment in which one of the beverage components 5a is contained within a cavity 11 of the support member and another beverage component 5b is applied to the outer surface of the support member.

Figure 9 shows a further embodiment of the beverage applicator 1 in which the beverage material 5 is applied to the outer surface of the support member 3 and encased by a perforated plastics sheath 13. The perforated sheath serves to secure the beverage material to the support member or to prevent the beverage from falling off or being knocked off prior to the beverage applicator being utilised to produce a beverage. Upon insertion of the beverage applicator into water the beverage material dissolves and the solution passes through perforations 15 in the sheath. This embodiment has the advantage that the beverage material is retained within the sheath until it is dissolved, or in the form of small particles and so lumps of undissolved beverage component may be completely avoided in the beverage.

In an alternative embodiment, not shown, the support member includes projections which can assist in retaining the beverage component and possibly protecting the beverage component from being knocked off.

Although the beverages have been described as a combination of coffee, sugar and milk (which may be in powder form) it will be appreciated that any one or more of those components may be used with an applicator or another component or another drink such as chocolate may be used with the applicator. It is envisaged that, with coffee, consumers will be offered a choice of applicators with coffee only, with coffee and sugar, with coffee and milk or with all three ingredients. The beverage may be dry material, paste, or viscous material or any combination thereof. Furthermore, the beverage component, or at least one of the beverage components may be arranged to be mixed in the drink rather than being dissolved in the drink.

The drink may be made by the user, selecting the applicator with the required drink and either inserting the applicator into hot water or subsequently adding water to a container in which the applicator is located and then stirring the applicator to mix the drink.

It can be seen that the making of each drink only produces two items, the applicator and the container, after drinking which are easy to dispose of, without sachets or containers of milk having to be disposed. Furthermore, the mixing of a drink is quick and easy.

Whilst the applicators shown in the drawings have specific shapes, other shapes are envisaged. For instance, the applicators may be uniform in cross-section along the part where the ingredients are located, or along substantially their whole length. The cross-section of at least part of the applicator may be round, square, equilateral or in a flat stick shape.

The present invention includes any combination of the herein referred to features.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. A beverage maker comprising a support (1) having a handle (3) at one region and at least one beverage component (5) at a different region.

2. A beverage maker as claimed in Claim 1 in which the beverage component (5) comprises more than one component of a drink.

3. A beverage maker as claimed in Claim 2 in which the beverage component (5) comprises a mixture of beverage components.

4. A beverage maker as claimed in Claim 1 or 2 in which two or more beverage components are separate from each other.

5. A beverage maker as claimed in any preceding claim in which the support (1) includes one or more apertures (7) passing therethrough in the region where the beverage component is located.

6. A beverage maker as claimed in any preceding claim in which the support comprises cavities (11) extending partially therethrough in the region where the beverage component is located.

7. A beverage maker as claimed in any preceding claim in which a protective layer (9,13) is applied to at least part of the outer exposed surface of the beverage (5).

8. A beverage maker as claimed in Claim 7 in which the protective layer (9) is soluble in water.

9. A method of making a beverage comprising locating a beverage component mounted on a support (1) into a container, locating a liquid component of the drink into the container and stirring the support by holding a handle (3) on the support (1) to at least partially mix the beverage.

10. A method as claimed in Claim 9 comprising selecting a beverage maker from one of a plurality of a different beverage makers which have different tastes.

11. A kit of parts for making a beverage comprising a beverage container and a plurality of supports each having a handle (3) at one end region and at least one beverage component (5) at a different region, each beverage component (5) on each support having a different taste.
